# EUROPÄISCHE PATENTSCHRIFT

(11) **EP 3 710 686 B1**
(45) Veröffentlichungstag und Bekanntmachung des Hinweises auf die Patenterteilung: **25.02.2026**
(21) Anmeldenummer: 18803941.6
(22) Anmeldetag: 14.11.2018
(51) Int. Cl.: F02F 3/02, F02F 3/22

(54) **STAHLKOLBEN MIT OPTIMIERTEM DESIGN**
STEEL PISTON WITH OPTIMIZED DESIGN
PISTON EN ACIER À DESIGN OPTIMISÉ

(30) Priorität: 14.11.2017 DE 102017126688
(43) Veröffentlichungstag der Anmeldung: 23.09.2020
(73) Patentinhaber: KS Kolbenschmidt GmbH, 74172 Neckarsulm (DE)
(72) Erfinder: OTTLICZKY, Emmerich, 74670 Forchtenberg-Ernsbach (DE); LUZ, Gerhard, 74226 Nordheim (DE); WEISS, Eberhard, 74243 Langenbrettach (DE); ROTH, Ingo, 74629 Pfedelbach (DE)
(74) Vertreter: HKW Intellectual Property PartG mbB
(86) Internationale Anmeldenummer: PCT/EP2018/081194
(87) Internationale Veröffentlichungsnummer: WO 2019/096827

(56) Entgegenhaltungen:
- WO-A1-2013/050020
- WO-A2-2011/056822
- WO-A2-2013/097839
- DE-A1- 102007 031 581
- US-A1- 2002 046 593
- US-A1- 2013 233 270
- US-A1- 2016 123 274

## Beschreibung

Die Erfindung betrifft einen Stahlkolben für eine Brennkraftmaschine, aufweisend ein oberes Teil, in dem ein Ringfeld mit zumindest einer Ringnut angeordnet ist, wobei sich dem oberen Teil ein unteres Teil anschließt, dass zwei gegenüberliegende Schaftwandabschnitte aufweist, wobei die beiden Schaftwandabschnitte über zwei gegenüberliegend angeordnete Kastenwände verbunden sind, wobei in jeder Kastenwand eine von einer Kolbennabe umgebene Bolzenbohrung vorgesehen ist, gemäß den Merkmalen des Oberbegriffes des Patentanspruches 1, sowie ein Verfahren zur Herstellung eines solchen Stahlkolbens.

Kolben aus einem Stahlwerkstoff mit den vorstehend genannten Merkmalen (sogenanntes Kastendesign) sind grundsätzlich bekannt. Sie werden eingesetzt in Brennkraftmaschinen für hohe Leistungsanforderungen, um den sich den Leistungsanforderungen zu erfüllenden Parameter wie insbesondere Verbrennungstemperatur und Verbrennungsdruck standhalten zu können. Allerdings hat der Stahlwerkstoff bei solchen Kolben den Nachteil eines hohen Gewichtes, was sich wiederum insbesondere auf den Kraftstoffverbrauch erhöhend auswirkt.

Aus dem Stand der Technik für Stahlkolben, insbesondere geschmiedete Stahlkolben, ist es bekannt, dass der Kolben in der Kastenwand und Fensterfläche (Kolbennabe) einen in Richtung der Kolbenlängsachse (auch als Kolbenhubachse bezeichnet) annähernd geraden Verlauf mit fertigungsbedingten geringen Entformungsschrägen aufweist.

Der Erfindung liegt die Aufgabe zu Grunde, einen Stahlkolben durch spezielle Designmerkmale bezüglich seiner Funktion und/oder im Gewicht zu optimieren.

Diese Aufgabe ist durch die Merkmale des Patentanspruches 1 gelöst.

Erfindungsgemäß ist vorgesehen, dass zumindest ein Durchbruch oder zumindest eine Vertiefung in einem Bereich um die Bolzenbohrung herum angeordnet ist. Die zumindest eine Vertiefung oder der zumindest eine Durchbruch ist bei Draufsicht auf die Bolzenbohrung von außen zum Beispiel rechts und/oder links und/oder oberhalb und/oder unterhalb der Bolzenbohrung vorgesehen, kann aber auch in dazwischenliegenden Bereichen vorgesehen werden. Insbesondere ist in einer Ausgestaltung der Erfindung in dem Bereich zwischen der Kolbennabe und dem Schaftwandabschnitt zumindest ein Durchbruch oder zumindest eine Vertiefung in der Kastenwand vorhanden. Der zumindest eine Durchbruch um die Bolzenbohrung herum, insbesondere in der zumindest einen Kastenwand, bewirkt eine deutliche Gewichtsreduzierung in einem solchen Bereich des Stahlkolbens, in den ein solcher Durchbruch gelegt werden kann, ohne die Festigkeit des Stahlkolbens während seines Betriebes im Zylinder der Brennkraftmaschine nachteilig zu schwächen. Die Form des Durchbruchs kann zum Beispiel rund (vorzugsweise hergestellt durch Bohren), quadratisch (vorzugsweise hergestellt durch Fräsen), rechteckförmig (wiederum vorzugsweise hergestellt durch Fräsen), oval (ebenfalls wiederum vorzugsweise hergestellt durch Fräsen) oder in sonstiger geeigneter geometrischer Form ausgestaltet werden. Der zumindest eine Durchbruch kann nach der Herstellung eines Kolbenrohlings (Gießen oder vorzugsweise Schmieden) des Stahlkolbens nachträglich eingebracht werden. Alternativ (sowie bevorzugt) dazu ist es denkbar, den zumindest einen Durchbruch schon mit Herstellung des Kolbenrohlings, der mittels eines materialverdrängenden Verfahrens (wie insbesondere einem Schmiedeverfahren) hergestellt wird, in diesen einzubringen. Die optimale Größe, d. h., die Fläche des Durchbruchs in der Kastenwand, kann in Abhängigkeit von dem Design, d. h. der Konstruktion des Kolbens, entweder durch Versuche oder insbesondere vorzugsweise durch bekannte und etablierte Finite-Elemente-Methoden ermittelt werden. Gleiches gilt für die Anordnung einer Vertiefung um die Bolzenbohrung herum, insbesondere in der Kastenwand, die nur auf der nach außen (in Richtung einer Zylinderwand der Brennkraftmaschine) weisenden Kastenwand, nur auf der nach innen (in Richtung der mittig verlaufenden Kolbenhubachse) weisenden Kastenwand oder auf beiden Seiten der Kastenwand vorgesehen werden kann. Mittels einer solchen Vertiefung wird ebenfalls Material an solchen Stellen des Stahlkolbens weggenommen beziehungsweise im Schmiedeverfahren verdrängt, die nicht zu einer Beeinträchtigung seiner Festigkeit führen, wobei jedoch gleichzeitig durch die Materialwegnahme Gewicht eingespart werden kann. Bevorzugt ist jedoch die Anordnung zumindest eines Durchbruches in einer Kastenwand, da hierdurch gegenüber einer Vertiefung deutlich mehr Material eingespart und Gewicht reduziert werden kann.

Erfindungsgemäß ist vorgesehen, dass je ein Durchbruch rechts und links von der Bolzenbohrung und eine Vertiefung oberhalb der Bolzenbohrung vorgesehen werden (jeweils betrachtet bei Draufsicht auf die Bolzenbohrung von außen).

Erfindungsgemäß ist weiter vorgesehen, dass die Kastenwand um einen Winkel α (alpha) in Bezug auf eine Kolbenhubachse (Hochachse) geneigt angeordnet ist. Dadurch lässt sich der Kolbenrohling, auf dessen Basis der fertige Stallkolben hergestellt wird, bei geeigneter Werkzeugwahl und Bearbeitungsrichtung sehr gut in einem Schmiedeverfahren herstellen, um ein festes Gefüge und daraus resultierend eine Strukturoptimierung für den aus diesem Kolbenrohling hergestellten fertigen betriebsbereiten und hoch belasteten Kolben zu erzielen. Durch die schräg gestellten Kastenwände lassen sich außerdem Reibung, Geräuschentwicklung, Ölverbrauch und Blow-By-Effekte vorteilhaft reduzieren.

In Weiterbildung der Erfindung ist vorgesehen, dass in einer Bolzenfläche der Bolzenbohrung eine Aushebenut, insbesondere eine nicht in Kolbenlängsachse liegende Aushebenut, angeordnet ist. In der Aushebenut kann in an sich bekannter Weise ein Sicherungsring für den Kolbenbolzen angeordnet werden. Außerdem bewirkt diese Aushebenut eine Materialwegnahme, durch die weiterhin Gewicht des Stahlkolbens eingespart wird. Ergänzend hierzu ist vorgesehen, dass sich ausgehend von der Aushebenut in Richtung zumindest einen Endes der Bolzenbohrung zumindest eine Ausnehmung erstreckt. Auch durch diese zumindest eine Ausnehmung wird an solchen Stellen des Stahlkolbens Gewicht eingespart, in denen durch die Wegnahme des Materials keine Schwächung des Stahlkolbens eintritt. Auch die Aushebenut kann nach Herstellung des Kolbenrohlings (wiederum durch Gießen, Schmieden oder dergleichen) nachträglich eingebracht werden. In bevorzugter Weise wird sie jedoch schon mittels des materialverdrängenden Verfahrens (wie Schmieden) eingebracht und lediglich nachträglich durch Bearbeitung (wie zum Beispiel mittels eines spanabhebenden Verfahrens) auf Maß gebracht.

In Weiterbildung der Erfindung ist vorgesehen, dass sich ausgehend von der zumindest einen Ringnut zumindest eine Ausnehmung in dem oberen Teil des Stahlkolbens nach oben und/oder nach unten in Bezug auf die Kolbenhubachse erstreckt. Mit einer solchen Ausnehmung wird nicht nur Material eingespart und damit das Gewicht des Stahlkolbens reduziert, sondern es kann auch Öl aus der Ringnut, in der sich ein Ölring oder auch kein Ölring befindet, gezielt abgeführt werden.

Eines der vorstehend beschriebenen Elemente oder eine Kombination oder alle der vorstehend beschriebenen Elemente des Stahlkobens, wie die zumindest eine Vertiefung und/oder der zumindest eine Durchbruch und/oder die schräg gestellten Kastenwände und/oder die Aushebenut in der Bolzenbohrung und/oder die sich ausgehend von der Aushebenut in Richtung zumindest des einen Endes der Bolzenbohrung erstreckende Ausnehmung und/oder die sich ausgehend von der zumindest einen Ringnut in dem oberen Teil des Stahlkolbens nach oben und/oder nach unten in Bezug auf die Kolbenhubachse erstreckende zumindest eine Ausnehmung, wird/werden schon mit der Herstellung des Kolbenrohlings mittels eines materialverdrängenden Verfahrens (wie einem Schmiedeverfahren) realisiert und nachträglich, soweit überhaupt noch erforderlich, nachbearbeitet. Diese Nachbearbeitung erfolgt in an sich bekannter Weise mittels eines spanabhebenden Verfahrens (wie beispielsweise einem Fräsverfahren).

Ein Stahlkolben mit einem Teil der vorstehend beschriebenen Merkmale, aber auch mit allen vorstehend beschriebenen Merkmalen, wird im Folgenden noch einmal zusammengefasst:
Der Stahlkolben weist an seiner Außenform, insbesondere an den Kastenwänden und Fensterflächen von der Hauptkontur entlang der Kolbenlängsachse abweichende, vertiefte oder einwärts oder auswärts geneigte Merkmale auf, wie beispielsweise
- von unten nach oben einwärts oder auswärts geneigte Kastenwände,
- Ausnehmungen, die im Bereich der Ölringnut liegen und zur Öldrainage dienen,
- Ausnehmungen, die im Außenbereich der Bolzenbohrung liegen und als Aushebenut für den Sicherungsring dienen,
- Ausnehmungen, die in der Kastenfläche liegen oder von der Kastenfläche schräg nach innen geneigt hinter das Ringfeld ragen und zur Gewichtsreduzierung dienen,
- Vertiefungen in der Kastenwand und/oder Durchbrüche durch die Kastenwand, die zur Gewichtsreduzierung dienen.

Durch die vorstehend erfindungsgemäß genannten Merkmale wird die Funktion des Stahlkolbens verbessert, wie zum Beispiel der Ölverbrauch, das Geräuschverhalten oder die Montagefreundlichkeit. Außerdem kann das Gewicht des Stahlkolbens im Vergleich zu bekannten, herkömmlichen Ausführungen deutlich reduziert werden. Außerdem ergeben sich durch die erfindungsgemäßen Merkmale bei der Anwendung des Stahlkolbens im Zylinder der Brennkraftmaschine eine verbesserte Funktion in dieser Brennkraftmaschine und sie trägt zu einer Reduzierung der Emissionen und des Kraftstoffverbrauchs bei.

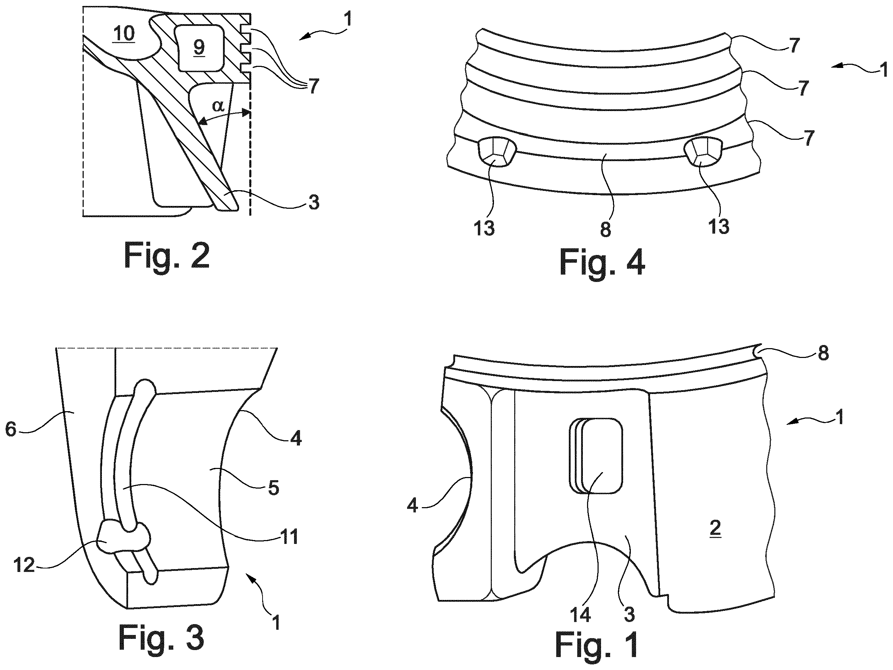

Im Folgenden wird ein Ausführungsbeispiel des erfindungsgemäßen Stahlkolbens anhand der Figuren 1 bis 4 erläutert.

In der Figur 1 ist ausschnittsweise ein Stahlkolben 1 gezeigt, der einen Schaftwandabschnitt 2 (und einen nicht dargestellten gegenüberliegenden weiteren Schaftwandabschnitt) aufweist. Die beiden gegenüberliegenden Schaftwandabschnitte 2 sind über jeweils eine Kastenwand 3 miteinander verbunden, wobei die beiden gegenüberliegenden Kastenwände 3 (in Figur 1 nur eine Kastenwand 3 dargestellt) gegenüber dem Außendurchmesser des Stahlkolbens 1, auf dem sich die äußere Oberfläche der Schaftwandabschnitte 2 befindet, zurückgesetzt sind. Dem einen parallel zur Kolbenhubachse verlaufenden Ende des Schaftwandabschnittes 2, von dem sich die Kastenwand 3 ausgehend erstreckt, gegenüberliegend ist in Figur 1 eine Bolzenbohrung 4 angedeutet.

Figur 2 zeigt den Stahlkolben 1 ausschnittsweise in einer Schnittdarstellung, wohingegen die Figuren 3 und 4 weitere Detailansichten (wiederum ausschnittsweise) des Stahlkolbens 1 zeigen.

In diesen Figuren 2 bis 4 ist dargestellt, dass die die Schaftwandabschnitte 2 miteinander verbindende Kastenwand 3 um einen Winkel α (alpha) geneigt in Bezug auf die Kolbenhubachse (gestrichelt dargestellt) angeordnet ist. Mit der Bezugsziffer 5 ist eine nach innen weisende Bolzenfläche der Bolzenbohrung 4 bezeichnet. Mit der Bezugsziffer 6 ist eine Kolbennabe bezeichnet, die um die Bolzenbohrung 4 herum angeordnet ist. Die Kolbennabe 6 kann direkt in eine Kastenwand 3 übergehen, ohne dass eine Rückstufung, eine Wölbung im Übergang oder dergleichen vorhanden ist. Es ist allerdings auch denkbar, dass bei dem Übergang von der Kolbennabe 6 in Richtung der sich anschließenden Kastenwand 3 ein gestufter oder gewölbter Übergang vorhanden ist. Ein Ringfeld 7 in dem oberen Teil des Stahlkolbens 1 weist zumindest eine Ringnut 8 auf. Bei diesem Ausführungsbeispiel weist das Ringfeld 7 insgesamt drei übereinanderliegende Ringnuten 8 in dem oberen Teil des Stahlkolbens 1 auf. Die Ringe sind nicht dargestellt.

Der Stahlkolben 1 des Ausführungsbeispieles weist weiterhin einen ringförmig verlaufenden Kühlkanal 9 und eine konzentrisch innerhalb des Kühlkanales 9 liegende Brennraummulde 10 auf. Diese beiden Elemente können einzeln oder gemeinsam vorhanden sein, wobei jedoch auch nur der Kühlkanal 9 oder nur die Brennraummulde 10 vorhanden sein können. Die Bezugsziffer 11 kennzeichnet eine in der Bolzenfläche 5 liegende Aushebenut 11, in die ein Sicherungsring für den nicht dargestellten Kolbenbolzen eingesetzt wird, wenn der Kolbenbolzen in der Bolzenbohrung 4 eingesetzt ist. Von der Aushebenut 11 erstreckt sich bei diesem Ausführungsbeispiel nach außen, d. h. in Richtung der Kolbennabe 6, eine einzige Ausnehmung 12, wobei jedoch auch mehr als eine einzige Ausnehmung 12 vorgesehen werden kann. Die zumindest eine Ausnehmung 12 kann auch nach innen gerichtet sein.

Mit der Bezugsziffer 13 ist zumindest eine weitere Ausnehmung bezeichnet, die sich ausgehend von einer Ringnut 8 (in Figur 4 dargestellt die untere Ringnut 8) im oberen Teil des Stahlkolbens 1 bei Betrachtung der Figur 4 nach unten erstreckt. Selbstverständlich ist es auch denkbar, die zumindest eine Ausnehmung 13 auch im Bereich der anderen Ringnuten 8 vorzusehen. Genauso kann sich die zumindest eine Ausnehmung 13 nicht nur Betrachtung der Figur 4 nach unten, sondern nur nach oben oder auch nach unten und nach oben erstrecken.

Als ein weiteres erfindungsgemäßes Merkmal ist in Figur 1 noch ein Durchbruch 14 in der Kastenwand 3 dargestellt. Es kann sich bei diesem Durchbruch 14 um den einzigen Durchbruch in dieser Kastenwand 3 handeln, wobei es auch denkbar ist, mehr als den einen dargestellten Durchbruch 14 in der Kastenwand 3 vorzusehen. Gleiches gilt für das Vorsehen zumindest eines Durchbruches 14 nicht nur in der einen dargestellten Kastenwand 3, sondern auch in zumindest einer weiteren Kastenwand 3, vorzugsweise in allen vier vorhandenen Kastenwänden 3. Alternativ oder ergänzend zu dem zumindest einen dargestellten Durchbruch 14 kann auch zumindest eine Vertiefung in der Kastenwand (auf der nach außen weisenden Seite und/oder der nach innen weisenden Seite der Kastenwand 3 vorgesehen werden.

### Bezugszeichenliste

- 1.: Stahlkolben
- 2.: Schaftwandabschnitt
- 3.: Kastenwand
- 4.: Bolzenbohrung
- 5.: Bolzenfläche
- 6.: Kolbennabe
- 7.: Ringfeld
- 8.: Ringnut
- 9.: Kühlkanal
- 10.: Brennraummulde
- 11.: Aushebenut
- 12.: Ausnehmung
- 13.: Ausnehmung
- 14.: Durchbruch

## Patentansprüche

1. Stahlkolben (1) für eine Brennkraftmaschine, aufweisend ein oberes Teil, in dem ein Ringfeld (7) mit zumindest einer Ringnut (8) angeordnet ist, wobei sich dem oberen Teil ein unteres Teil anschließt, das zwei gegenüberliegende Schaftwandabschnitte (2) aufweist, wobei die beiden Schaftwandabschnitte (2) über zwei gegenüberliegend angeordnete Kastenwände (3) verbunden sind, wobei in jeder Kastenwand (3) eine von einer Kolbennabe (6) umgebene Bolzenbohrung (4) vorgesehen ist,
wobei zumindest ein Durchbruch (14) oder zumindest eine Vertiefung in einem Bereich um die Bolzenbohrung (4) herum und die Kastenwand (3) um einen Winkel alpha in Bezug auf eine Kolbenhubachse geneigt angeordnet ist, und
wobei je ein Durchbruch (14) rechts und links von der Bolzenbohrung (4) und eine Vertiefung oberhalb der Bolzenbohrung (4) vorgesehen sind.

2. Stahlkolben (1) nach Anspruch 1, **dadurch gekennzeichnet, dass** der zumindest eine Durchbruch (14) oder die zumindest eine Vertiefung in der Kastenwand (3) in dem Bereich zwischen der Kolbennabe (6) und dem Schaftwandabschnitt (2) vorhanden ist.

3. Stahlkolben (1) nach Patentanspruch 1, **dadurch gekennzeichnet, dass** in jeder Kastenwand (3) der Durchbruch (14) oder die Vertiefung vorhanden ist.

4. Stahlkolben (1) nach Patentanspruch 1, 2 oder 3, **dadurch gekennzeichnet, dass** in einer Bolzenfläche (5) der Bolzenbohrung (4) eine Aushebenut (11) angeordnet ist.

5. Stahlkolben (1) nach einem der vorhergehenden Patentansprüche, **dadurch gekennzeichnet, dass** sich ausgehend von der Aushebenut (11) in Richtung zumindest des einen Endes der Bolzenbohrung (4) eine Ausnehmung (12) erstreckt.

6. Stahlkolben (1) nach einem der vorhergehenden Patentansprüche, **dadurch gekennzeichnet, dass** sich ausgehend von der zumindest einen Ringnut (8) zumindest eine Ausnehmung (13) in dem oberen Teil des Stahlkolbens (1) nach oben und/oder nach unten in Bezug auf die Kolbenhubachse erstreckt.

7. Verfahren zur Herstellung eines Stahlkolbens (1) nach einem der vorhergehenden Patentansprüche, **dadurch gekennzeichnet, dass** ein Kolbenrohling mittels eines materialverdrängenden Verfahrens hergestellt wird und die zumindest eine Vertiefung und/oder der zumindest eine Durchbruch (14) und/oder die um einen Winkel alpha in Bezug auf eine Kolbenhubachse schräg gestellten Kastenwände (3) und/oder die Aushebenut (11) in der Bolzenbohrung und/oder die sich ausgehend von der Aushebenut (11) in Richtung zumindest des einen Endes der Bolzenbohrung erstreckende Ausnehmung (12) und/oder die sich ausgehend von der zumindest einen Ringnut (8) nach oben und/oder nach unten in Bezug auf die Kolbenhubachse erstreckende zumindest eine Ausnehmung (13) in dem oberen Teil des Stahlkolbens (1 ), schon mit der Herstellung des Kolbenrohlings mittels des materialverdrängenden Verfahrens realisiert wird/werden

8. Verfahren zur Herstellung eines Stahlkolbens (1) nach Patentanspruch 7, **dadurch gekennzeichnet, dass** der Kolbenrohling zumindest bereichsweise nachträglich nachbearbeitet wird.

## Claims

1. Steel piston (1) for a combustion engine, comprising an upper part, in which a ring section (7) with at least one ring groove (8) is arranged, wherein the upper part is connected to a lower part, which has two opposite skirt wall sections (2), wherein the two skirt wall sections (2) are connected by two mutually opposite case walls (3), wherein a pin bore (4) surrounded by a piston boss (6) is provided in each case wall (3),
wherein at least one aperture (14) or at least one recess is arranged in a region around the pin bore (4) and the case wall (3) inclined by an angle alpha with respect to a piston stroke axis, and
wherein an aperture (14) is provided to the right and left of the pin bore (4) and a recess is provided above the pin bore (4).

2. Steel piston (1) according to Claim 1, **characterized in that** the at least one aperture (14) or the at least one recess is provided in the case wall (3) in the region between the piston boss (6) and the skirt wall section (2).

3. Steel piston (1) according to Patent Claim 1, **characterized in that** the aperture (14) or the recess is provided in each case wall (3).

4. Steel piston (1) according to Patent Claim 1, 2 or 3, **characterized in that** an excavation groove (11) is arranged in a pin surface (5) of the pin bore (4).

5. Steel piston (1) according to one of the preceding patent claims, **characterized in that**, starting from the excavation groove (11), a recess (12) extends in the direction of at least one end of the pin bore (4).

6. Steel piston (1) according to one of the preceding patent claims, **characterized in that**, starting from the at least one ring groove (8), at least one recess (13) in the upper part of the steel piston (1) extends upwards and/or downwards with respect to the piston stroke axis.

7. Method for producing a steel piston (1) according to one of the preceding patent claims, **characterized in that** a piston blank is produced by means of a material displacement process, and the at least one recess and/or the at least one aperture (14) and/or the case walls (3) positioned obliquely by an angle alpha with respect to a piston stroke axis and/or the excavation groove (11) in the pin bore and/or the recess (12) extending starting from the excavation groove (11) in the direction of at least one end of the pin bore and/or the at least one recess (13) extending starting from the at least one ring groove (8) upwards and/or downwards with respect to the piston stroke axis is/are realized in the upper part of the steel piston (1) already with the production of the piston blank by means of the material displacement process.

8. Method for producing a steel piston (1) according to Patent Claim 7, **characterized in that** the piston blank is subsequently reworked at least in regions.

## Revendications

1. Piston en acier (1) pour un moteur à combustion, comprenant une partie supérieure, dans laquelle est disposée une section annulaire (7) avec au moins une rainure annulaire (8), la partie supérieure étant contiguë à une partie inférieure, qui présente deux sections de paroi de jupe (2) opposées, les deux sections de paroi de jupe (2) étant reliées par deux parois de boîtier (3) opposées l'une à l'autre, un alésage de goupille (4) entouré par un bossage de piston (6) étant prévu dans chaque paroi de boîtier (3),
au moins une ouverture (14) ou au moins un évidement étant disposé dans une région autour de l'alésage de goupille (4) et de la paroi de boîtier (3) inclinée d'un angle alpha par rapport à un axe de course de piston, et
une ouverture (14) étant prévue à droite et à gauche de l'alésage de goupille (4) et un évidement étant prévu au-dessus de l'alésage de goupille (4).

2. Piston en acier (1) selon la revendication 1, **caractérisé en ce que** l'au moins une ouverture (14) ou l'au moins un évidement est prévu dans la paroi de boîtier (3) dans la région entre le bossage de piston (6) et la section de paroi de jupe (2).

3. Piston en acier (1) selon la revendication 1, **caractérisé en ce que** l'ouverture (14) ou l'évidement est prévu dans chaque paroi de boîtier (3).

4. Piston en acier (1) selon la revendication 1, 2 ou 3, **caractérisé en ce qu'**une rainure creuse (11) est disposée dans une surface de goupille (5) de l'alésage de goupille (4).

5. Piston en acier (1) selon l'une quelconque des revendications précédentes, **caractérisé en ce qu'**un évidement (12) s'étend à partir de la rainure creuse (11) dans la direction d'au moins une extrémité de l'alésage de goupille (4).

6. Piston en acier (1) selon l'une quelconque des revendications précédentes, **caractérisé en ce qu'**au moins un évidement (13) s'étend à partir de l'au moins une rainure annulaire (8) dans la partie supérieure du piston en acier (1) vers le haut et/ou vers le bas par rapport à l'axe de course de piston.

7. Procédé de fabrication d'un piston en acier (1) selon l'une quelconque des revendications précédentes, **caractérisé en ce que** une ébauche de piston est fabriquée au moyen d'un procédé de refoulement de matériau, et l'au moins un évidement et/ou l'au moins une ouverture (14) et/ou les parois de boîtier (3) disposées de manière inclinée d'un angle alpha par rapport à un axe de course de piston et/ou la rainure creuse (11) dans l'alésage de goupille et/ou l'évidement (12) s'étendant à partir de la rainure creuse (11) dans la direction d'au moins une extrémité de l'alésage de goupille et/ou l'au moins un évidement (13) s'étendant à partir de l'au moins une rainure annulaire (8) vers le haut et/ou vers le bas par rapport à l'axe de course de piston sont réalisés dans la partie supérieure du piston en acier (1) déjà avec la fabrication de l'ébauche de piston au moyen du procédé de refoulement de matériau.

8. Procédé de fabrication d'un piston en acier (1) selon la revendication 7, **caractérisé en ce que** l'ébauche de piston est ensuite réusinée au moins par endroits.
